# EUROPÄISCHE PATENTSCHRIFT

(11) **EP 0 459 181 B1**
(45) Veröffentlichungstag und Bekanntmachung des Hinweises auf die Patenterteilung: **24.07.1996**
(21) Anmeldenummer: 91107342.7
(22) Anmeldetag: 06.05.1991
(51) Int. Cl.: H04M 1/02

(54) **Halterung einer Leiterplatte in einer Fernsprechstation**
Holder for a circuit board in a telephone set
Fixation d'un circuit imprimé dans un poste téléphonique

(30) Priorität: 01.06.1990 DE 9006248 U
(43) Veröffentlichungstag der Anmeldung: 04.12.1991
(73) Patentinhaber: SIEMENS AKTIENGESELLSCHAFT, 80333 München (DE)
(72) Erfinder: Rackelmann, Martin, Dipl.-Ing., W-4290 Bocholt (DE); Schröder, Friedrich, Dipl.-Ing., W-4230 Wesel (DE); Wabnitz, Werner, Dipl.-Ing., W-4250 Bottrop 2 (DE); Bahnsen, Hans Heinr., Dipl.-Ing., W-4290 Bocholt (DE)

(56) Entgegenhaltungen:
- DE-A- 3 316 202
- DE-U- 8 808 948
- DE-U- 8 810 967
- DE-U- 9 006 248

## Beschreibung

Die vorliegende Erfindung beinhaltet eine in einer aus Ober- und Unterteil bestehenden Fernsprechstation gehalterte und alle zur Herstellung einer Fernsprechverbindung erforderlichen elektrischen und elektronischen Bauelemente sowie Tonruf und Lautsprecher tragenden Leiterplatte.

Aus der DE-U-8 808 948 ist zum Beispiel bereits eine Anordnung bekannt, bei der die Leiterplatte auf am Unterteil des Gerätes angeordnete Rippen, unter Vorsprüngen und Zapfen gelagert ist, wobei der stufenförmig abgesetzte Zapfen mit seinem freien Ende eine Bohrung der Leiterplatte durchgreift und wobei am Oberteil der Fernsprechstation ein in Fluchtlinie mit diesem Zapfen verlaufender zweiter Zapfen vorgesehen ist, und beide Zapfen zur Verbindung von Ober- und Unterteil der Fernsprechstation dienen. Im allgemeinen werden derartige elektrische und elektronische Bauelemente tragende Leiterplatten innerhalb der Fernsprechstation verrastet gehalten. Diese Art der Leiterplattenhalterung ist jedoch relativ aufwendig und damit kostenintensiv. Da Ober- und Unterteil der Fernsprechstation üblicherweise miteinander verschraubt werden, stellen die beiden obengenannten Zapfen eine Möglichkeit zu der zitierten Verbindung dar. In der Praxis hat es sich jedoch gezeigt, daß zur stoßsicheren Befestigung der Leiterplatte innerhalb der Fernsprechstation mehrere Schrauben erforderlich sind. Soll die Leiterplatte lediglich zwischen zwei Zapfen gelagert und gehaltert werden, so hat es sich in diesem Fall als nachteilig erwiesen, daß aufgrund von Toleranzen bezüglich der Leiterplattendicke keine stets sichere Halterung der Leiterplatte bei Stoßbelastungen gewährleistet ist. Zur Vermeidung dieses Nachteils weist der zweite Zapfen Stege auf, die seinen freien Endbereich überragen und auf der Leiterplatte zur Anlage gelangen. Dadurch können Dickenschwankungen in der Leiterplatte durch Verformung der dünnwandigen Stege ausgeglichen werden.

Bei der vorliegenden Erfindung soll eine weitere Möglichkeit aufgezeigt werden, eine Leiterplatte innerhalb einer Fernsprechstation montagemäßige einfach und damit kostengünstig zu haltern.

Gemäß der Erfindung wird diese Aufgabe dadurch gelöst, daß am Ober- und Unterteil der Fernsprechstation mehrere Stützdome und Stütz- sowie Führungsrippen angeordnet sind, zwischen denen die Leiterplatte gehaltert ist und daß weiterhin am Ober- und Unterteil der Fernsprechstation außerhalb des Lagerbereiches der Leiterplatte zueinander fluchtende Befestigungsdome zum Verbinden der beiden Teile mittels Schrauben vorgesehen sind, deren Endbereiche im zusammengebauten Zustand der Fernsprechstation voneinander geringfügig beabstandet sind.

Die zur Herstellung einer Fernsprechverbindung erforderlichen elektrischen und elektronischen Bauelemente sowie Tonruf und Lautsprecher tragende Leiterplatte läßt sich in einem kostensparenden Arbeitsvorgang erstellen und wird bei der Endmontage lediglich zwischen den Stützdomen und den Stütz- und Führungsrippen am Ober- und Unterteil der Fernsprechstation eingelegt. Dabei dienen die Führungsrippen am Ober- und Unterteil der Fernsprechstation dazu, eine schwimmende Lagerung und Fixierung der Leiterplatte innerhalb der Fernsprechstation herzustellen, wobei sich die Leiterplatte innerhalb bestimmter vorgegebener Toleranzgrenzen verschieben läßt. Beim Zusammenbau der Fernsprechstation ist zunächst die Leiterplatte zwischen den genannten Stützdomen und Stützrippen gelagert. Eine endgültige stoßsichere Befestigung der Leiterplatte erfolgt durch Einbringen von Schrauben in die zueinander fluchtenden, am Ober- und Unterteil vorgesehenen und außerhalb des Lagerbereiches der Leiterplatte befindlichen Befestigungsdome, deren freie Endbereiche im Montageendzustand der Fernsprechstation geringfügig voneinander beabstandet sind. Dadurch wird die Leiterplatte unter Vorspannung zwischen den genannten Stützdomen und Stützrippen fest verspannt, so daß auch auf die Fernsprechstation einwirkende Stoßbelastungen keine Lageänderung der Leiterplatte bewirken.

Gemäß einer Weiterbildung der Erfindung können die Führungsrippen in Auskerbungen der Leiterplatte eingreifen, wobei diese Auskerbungen bezüglich ihrer Abmessungen etwas größer gehalten sind als die Stärke der Führungsrippen. Dadurch ist eine Verschiebung der Leiterplatte in bestimmten Toleranzgrenzen möglich.

Weiterhin kann am Oberteil der Fernsprechstation ein Zentrierzapfen vorgesehen sein, der in einen Durchbruch in der Leiterplatte eingreift, wobei der Durchbruch ebenfalls geringfügig größer ist als die Außenabmessungen des Zentrierzapfens. Durch diese Gestaltung von Zentrierzapfen und Durchbruch in der Leiterplatte ist ebenfalls eine Verschiebung der Leiterplatte parallel zu der Leiterplattenebene in bestimmten Toleranzgrenzen möglich.

Die Erfindung soll im folgenden anhand eines Ausführungsbeispiels näher erläutert werden.

Es zeigt
Figur 1 eine Aufsicht auf die Fernsprechstation bei abgenommenem Handapparat,
Figur 2 eine geschnittene Seitenansicht der Fernsprechstation längs der Schnittlinie II-II,
Figur 3 eine geschnittene Seitenansicht der Fernsprechstation längs der Schnittlinie III-III.

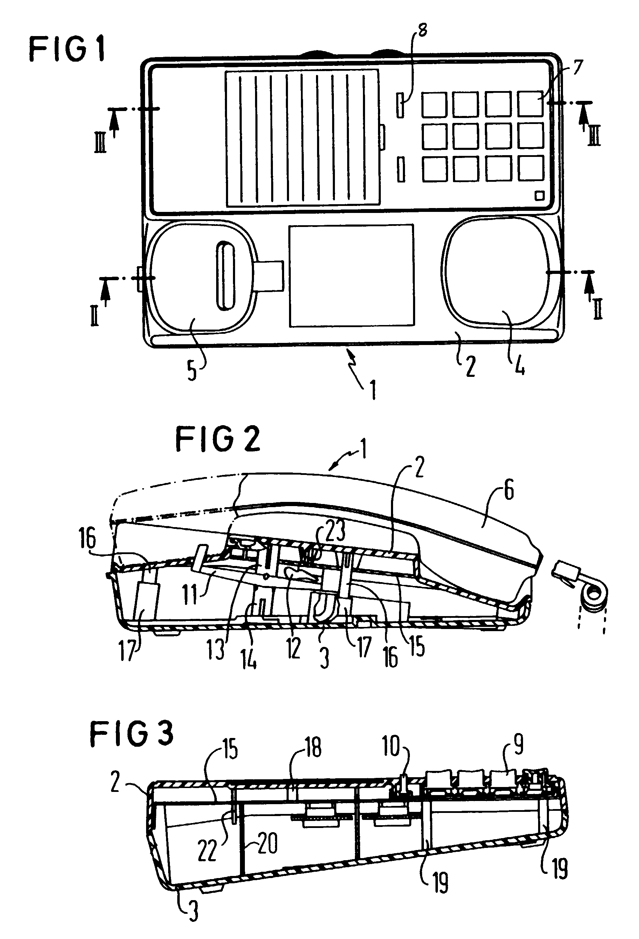

Die in den Figuren dargestellte Fernsprechstation 1 besteht aus dem Oberteil 2 und dem Unterteil 3. Das Oberteil 2 (Figur 1) besitzt Aufnahmemulden 4 und 5 für den Handapparat 6 sowie Ausnehmungen 7 bzw. 8 für die Tasten 9 der Wähltastatur bzw. für Sondertasten 10. Ferner ist am Oberteil 2 eine Fläche zur Aufnahme eines Beschriftungsfeldes vorgesehen.

Wie der Figur 2 zu entnehmen ist, ist die Schaltleiste 11 für den Gabelumschalter 12 zwischen zwei am Oberteil 2 und am Unterteil 3 angeordneten Lagerböcken 13 und 14 schwenkbar gelagert. In den Endbereichen der Fernsprechstation sowie im Bereich des Gabelumschalters 12 sind außerhalb des Lagerbereiches für die alle wesentlichen elektrischen und elektronischen Bauteile tragende Leiterplatte 15 zueinander fluchtende Befestigungsdome 16 bzw. 17 vorgesehen, die einstückig mit dem Ober- und Unterteil 2 und 3 verbunden sind. Die zueinander fluchtenden Befestigungsdome dienen zum Verbinden von Ober- und Unterteil 2 und 3 mittels Schrauben. Dabei weisen die am Unterteil 3 angeordneten Befestigungsdome 17 einen größeren Innendurchmesser zur Aufnahme der Schraubenköpfe auf, während die am Oberteil 2 vorgesehenen Befestigungsdome 16 zur Aufnahme des jeweiligen Schraubenschaftes dienen.

Zur Halterung der Leiterplatte 15 sind weiterhin am Oberteil 2 sowie am Unterteil 3 mehrere Stützdome 18 und 19 sowie Stützrippen 20 und Führungsrippen 22 vorgesehen. Die Leiterplatte ist zwischen den Stützdomen 18 und 19 sowie den Stützrippen 20 gelagert, während die Führungsrippen 22 in hier nicht sichtbarer Auskerbungen im Randbereich der Leiterplatte eingreifen und die Leiterplatte 15 mit Spiel innerhalb der Fernsprechstation 1 fixieren. Am Oberteil 2 der Fernsprechstation ist ferner ein Zentrierzapfen 23 angeordnet, der in einen Durchbruch in der Leiterplatte 15 eingreift. Auch dieser Durchbruch ist geringfügig größer als der Außendurchmesser des Zentrierzapfens 23, so daß Lagetoleranzen ausgeglichen werden können.

Zur Festlegung der Leiterplatte innerhalb der Fernsprechstation werden lediglich das Ober- und Unterteil 2 und 3 mittels der Schrauben miteinander verbunden. Dabei sind die freien Endbereiche der am Ober- und Unterteil 2 und 3 angebrachten Befestigungsdome 16 und 17 im zusammengesetzten Zustand der Fernsprechstation geringfügig voneinander beabstandet, daß im verbundenen Zustand von Ober- und Unterteil die Stützdome 18 sowie die Stützrippen 20 unter Vorspannung an der Leiterplatte zur Anlage gelangen.

## Patentansprüche

1. In einer aus Ober- und Unterteil (2, 3) bestehenden Fernsprechstation (1) gehalterte und alle zur Herstellung einer Fernsprechverbindung erforderlichen elektrischen und elektronischen Bauelemente sowie Tonruf und Lautsprecher tragenden Leiterplatte (15), **dadurch gekennzeichnet,** daß am Ober- und Unterteil (2, 3) der Fernsprechstation (1) mehrere Stützdome (18, 19) und Stütz- sowie Führungsrippen (20, 22) angeordnet sind, zwischen denen die Leiterplatte (15) gelagert ist und daß weiterhin am Ober- und Unterteil (2, 3) der Fernsprechstation (1) außerhalb des Lagebereiches der Leiterplatte (15) zueinander fluchtende Befestigungsdome (16, 17) zum Verbinden der beiden Teile (2, 3) mittels Schrauben vorgesehen sind, deren Endbereiche im zusammengesetzten Zustand der Fernsprechstation (1) voneinander geringfügig beabstandet sind.

2. Halterung einer Leiterplatte in einer Fernsprechstation nach Anspruch 1, **dadurch gekennzeichnet,** daß die am Oberteil (2) angeordnete Führungsrippe (22) in zumindest eine Auskerbung im Randbereich der Leiterplatte (15) eingreift.

3. Halterung einer Leiterplatte in einer Fernsprechstation nach Anspruch 1, **dadurch gekennzeichnet,** daß am Oberteil (2) ein Zentrierzapfen (23) angeordnet ist, der in einen Durchbruch in der Leiterplatte (15) eingreift, wobei der Durchbruch geringfügig größer ist als die Außenabmessungen des Zentrierzapfens (23).

## Claims

1. Circuit board (15), which is held in a telephone set (1) comprising an upper and lower part (2, 3) and carrying all the electrical and electronic components necessary for making a telephonic connection, as well as ringer and loudspeaker, characterized in that on the upper and lower parts (2, 3) of the telephone set (1) there are arranged a plurality of supporting pillars (18, 19) and supporting and guiding ribs (20, 22), between which the circuit board (15) is mounted, and in that, furthermore, on the upper and lower parts (2, 3) of the telephone set (1), outside the mounting region of the circuit board (15), there are provided mutually aligned fastening pillars (16, 17) for connecting the two parts (2, 3) by means of screws, the end regions of which pillars are slightly spaced apart from one another in the assembled state of the telephone set (1).

2. Holder for a circuit board in a telephone set according to Claim 1, characterized in that the guiding rib (22) arranged on the upper part (2) engages in at least one notch in the edge region of the circuit board (15).

3. Holder for a circuit board in a telephone set according to Claim 1, characterized in that, on the upper part (2), there is arranged a centring pin (23) which engages in an aperture in the circuit board (15), the aperture being slightly larger than the outer dimensions of the centring pin (23).

## Revendications

1. Plaquette (15) à circuits imprimés maintenue dans un poste téléphonique (1) constitué d'une partie supérieure et d'une partie inférieure (2,3) et portant tous les composants électriques et électroniques nécessaires à l'établissement d'une communication téléphonique ainsi qu'un dispositif de sonnerie et un haut-parleur, caractérisée en ce que plusieurs dômes (18, 19) d'appui et nervures (20, 22) d'appui ainsi que de guidage, entre lesquels la plaquette (15) à circuits imprimés est montée, sont montés dans les parties supérieure et inférieure (2,3) du poste téléphonique (1), et il est prévu en outre, dans les parties (2,3) supérieure et inférieure du poste téléphonique (1), en dehors de la zone d'appui de la plaquette (15) à circuits imprimés, des dômes (16,17) de fixation alignés l'un par rapport à l'autre et destinés à la liaison des deux parties (2,3) au moyen de vis, dont les zones d'extrémité sont légèrement éloignées l'une de l'autre lorsque le poste téléphonique (1) est assemblé.

2. Fixation d'une plaquette à circuits imprimés dans un poste téléphonique suivant la revendication 1, caractérisée en ce que la nervure (22) de guidage disposée sur la partie supérieure (2) pénètre dans au moins une entaille dans la zone de bord de la plaquette (15) à circuits imprimés.

3. Fixation d'une plaquette à circuits imprimés dans un poste téléphonique suivant la revendication 1, caractérisée en ce qu'un tourillon (23) de centrage, qui pénètre dans un passage de la plaquette (15) à circuits imprimés, est monté dans la partie supérieure (2), le passage étant légèrement plus grand que les dimensions extérieures du tourillon (23) de centrage.
